(19) **Europäisches Patentamt European Patent Office Office européen des brevets**

(11) **EP 4 221 575 B1**

(12) **EUROPEAN PATENT SPECIFICATION**

(45) Date of publication and mention of the grant of the patent:
**22.07.2026 Bulletin 2026/30**

(21) Application number: **21876242.5**

(22) Date of filing: **24.09.2021**

(51) International Patent Classification (IPC):
*A61B 5/00* *(2006.01)* *G01N 21/84* *(2006.01)*
*G06F 17/18* *(2006.01)*

(52) Cooperative Patent Classification (CPC):
**G06F 17/18; G01N 21/8483**

(86) International application number:
**PCT/US2021/051916**

(87) International publication number:
**WO 2022/072230 (07.04.2022 Gazette 2022/14)**

(54) **SYSTEM, METHOD AND POINT OF CARE DEVICE FOR IMAGE ANALYSIS OF DIAGNOSTIC ASSAYS**

SYSTEM, VERFAHREN UND PFLEGEPUNKTVORRICHTUNG ZUR BILDANALYSE VON DIAGNOSTISCHEN TESTS

SYSTÈME, MÉTHODE ET DISPOSITIF DE POINT D'INTERVENTION POUR L'ANALYSE D'IMAGE D'ANALYSES DIAGNOSTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2020 US 202063084609 P**

(43) Date of publication of application:
**09.08.2023 Bulletin 2023/32**

(73) Proprietor: **Siemens Healthcare Diagnostics, Inc. Tarrytown, NY 10591 (US)**

(72) Inventors:
• **ISSANI, Siraj**
  **Bangalore 560017 (IN)**
• **PRADHAN, Simit**
  **Bangalore 560030 (IN)**
• **BHATTACHARYA, Sudipa**
   **Bangalore 560067 (IN)**
• **DESHPANDE, Manish**
  **Newton, Massachusetts 02461 (US)**

(74) Representative: **Schweitzer, Klaus**
  **Dr. Müller Patentanwälte**
  **Mühlstraße 9A**
  **65597 Hünfelden (DE)**

(56) References cited:
WO-A1-2019/246361    WO-A1-2019/246361
US-A1- 2005 094 858    US-A1- 2015 171 236

**Description**

TECHNICAL FIELD

The present invention relates to an image analysis system which is usable on a point of care device, and method for image analysis enabling accurate and early interpretation of diagnostic assay results.

BACKGROUND OF THE DISCLOSURE

Lateral flow tests are widely used in point of care diagnostics for humans, animals, and/or food and water thereby, finding applications across industry sectors including pharma, environment, food and beverages, animal health and feed testing, and plant and crop health testing. The lateral flow tests employed in point of care diagnostics for humans may be performed by a healthcare professional or by a patient, and in a laboratory, a clinic or a home. Lateral-flow immunoassays are simple to use diagnostic devices. These devices are used in the lateral flow diagnostic tests for confirming presence or absence of a target analyte such as a pathogen or a biomarker in the patient's sample which may be provided in form of blood or urine. For example, lateral flow rapid test strip is the most widely used lateral-flow immunoassay for performing pregnancy tests using urine samples.

WO 2019/246361 A1 discloses a device to quantify analyte levels using gold nanoparticles and image processing of pixels isolated from a single vector. The device allows to quantify an amount of the analyte in the detection region on the substrate to determine a concentration of the analyte in the biological sample. Quantification of the analyte is performed using a rule-based image processing algorithm to interpret the intensity of a test line. The rule-based image processing algorithm identifies a region of interest and is used to process the image. Image processing can then capture lines of varying intensities.

Lateral flow immunoassays are mostly developed to be used with cassettes also referred to as cartridges. Typically, the cassettes used for lateral flow diagnostics are prone to misalignment with respect to a camera used for camera-based diagnostics as a result of manufacturing tolerances existing in both the cassettes and cassette trays holding the cassettes therein. This results in an incorrect region of interest (ROI) identification which forms the backbone of image processing that provides results of the diagnostic test. Additionally, in low-SNR cameras, noise plays a major role in masking the image information resulting in incorrect callout of results and a large variation in the accuracy of results. For example, in a Human Chorionic Gonadotropin (hCG) hormone detection using lateral flow assay, a density or thickness of the test line on the assay is an indication of the concentration of the hormone in the sample. However, due to low-SNR camera and stray lighting conditions, this intensity is known to vary statistically resulting in inaccurate callout of diagnostic results.

Thus, the cassette based immunoassay diagnostics and the low-SNR based imaging systems employed therewith pose several drawbacks which may impact lot to lot variations and producibility of test results associated therewith.

SUMMARY OF THE DISCLOSURE

An image analyses system according to claim 1 which is usable on a point of care device including a cassette holder capable of accommodating a cassette carrying a sample therein, a processor, and a memory unit coupled to the processor are disclosed herein. According to an embodiment, the point of care device also includes an imaging unit such as a camera. The memory unit includes an image analysis system for determining a concentration of one or more target analytes in the sample. The image analysis system includes an image acquisition module that obtains an image of the cassette via the imaging unit. The image analysis system includes an image pre-processing module that identifies a region of interest (ROI) from the image, corresponding to a result viewing area of the cassette, and generating a unidimensional (1D) profile of the ROI by averaging the ROI along a vertical axis. The image pre-processing module spatially filters the 1D profile for reducing distortions in the 1D profile. The image analysis system includes an image analytics module that probabilistically determines from the 1D profile, the concentration of the target analyte(s) in the sample based on a statistical model. The statistical model includes one or more parameters of the 1D profile, such as, intensity of the peaks of the 1D profile, varying with respect to one or more of time and the concentration of the one or more target analytes in the sample. The image analytics module applies a Gaussian filter to the 1D profile for determining a position of a test line and a position of a control line in the 1D profile, and applies a Laplacian filter to the 1D profile for determining an intensity of a peak when present in the 1D profile, at the test line and/or the control line. The image analytics module generates the statistical model based on 1D profiles of ROIs of images obtained for multiple cassettes. The image analytics module probabilistically determines the concentration of the of the target analyte(s) in the sample by applying one of a Bayesian filter and a Kalman filter. The image analysis system also includes a test result management module that renders a test result on the point of care device based on the concentration of the one or more target analytes in the sample.

Disclosed herein is the image analysis system according to claim 1 for determining from an image of a cassette containing a sample, a concentration of one or more target analytes in the sample, the image analysis system. According to one embodiment the image analysis system is deployable on the aforementioned point of care device. According to another embodiment, the image analysis system is deployable as an edge device and/or in a cloud computing environment capable of communicating with one or more point of care devices via a wireless or a wired communication network. The image analysis system disclosed herein includes an image pre-processing module that identifies a region of interest (ROI) from the image, corresponding to a result viewing area of the cassette and generating a unidimensional (1D) profile of the ROI by averaging the ROI along a vertical axis. The image pre-processing module spatially filters the 1D profile for reducing distortions in the 1D profile. The image analysis system includes an image analytics module that probabilistically determines from the 1D profile, the concentration of the target analyte(s) in the sample based on a statistical model. The statistical model includes one or more parameters of the 1D profile, such as, intensity of the peaks of the 1D profile, varying with respect to one or more of time and the concentration of the one or more target analytes in the sample. The image analytics module applies a Gaussian filter to the 1D profile for determining a position of a test line and a position of a control line in the 1D profile, and applies a Laplacian filter to the 1D profile for determining an intensity of a peak when present in the 1D profile. The image analytics module generates the statistical model based on 1D profiles of ROIs of images obtained for multiple cassettes. The image analytics module probabilistically determines the concentration of the of the target analyte(s) in the sample by applying one of a Bayesian filter and a Kalman filter. The image analysis system also includes a test result management module that renders a test result on the point of care device based on the concentration of the one or more target analytes in the sample.

Also disclosed herein is a point of care system according to claim 2 and a method for determining from an image of a cassette containing a sample, a concentration of one or more target analytes in the sample according to claim 8. The method includes identifying a region of interest (ROI) from the image, corresponding to a result viewing area of the cassette, generating a unidimensional (1D) profile of each ROI by averaging the ROI along a vertical axis, and probabilistically determining from the ID profile, the concentration of the one or more target analytes in the sample based on a statistical model having one or more parameters of the 1D profile varying with respect to one or more of time and the concentration of the one or more target analytes in the sample. The method includes spatially filtering the 1D profile for reducing distortions in the 1D profile. For probabilistically determining the concentration of the one or more target analytes in the sample, the method applies a Gaussian filter to the 1D profile for determining a position of a test line and a position of a control line in the 1D profile, applies a Laplacian filter to the 1D profile for determining an intensity of a peak when present in the 1D profile, and verifies the intensity based on the statistical model and one of a Bayesian filter and a Kalman filter. The method also includes generating the statistical model based on 1D profiles of ROIs of images obtained for plurality of cassettes.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims expressly limit these terms to specific embodiments.

The invention is set out in the appended set of claims.


BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:

Figure 1A illustrates a cassette employed in a lateral flow test;

Figure 1B illustrates a result viewing area of the cassette shown in Figure 1A;

Figures 2A-2B illustrate a point of care device, according to various embodiments of the present disclosure;

Figure 2C illustrates an image analysis system shown in Figures 2A-2B for determining a concentration of an analyte in a sample, according to an embodiment of the present disclosure;

Figures 3A-3B illustrate process flowcharts of a method for determining a concentration of an analyte in a sample, according to various embodiments of the present disclosure;

Figure 4 illustrates a graphical representation of a spatially filtered unidimensional profile of an image processed by the image analysis system shown in Figures 2A-2B, according to an embodiment of the present disclosure;

Figures 5A-5B illustrate comparative graphical representations of 1D profiles corresponding to images registered using a Gaussian filter and not registered using a Gaussian filter, by the image analysis system shown in Figures 2A-2B, according to an embodiment of the present disclosure; and

Figure 6 illustrates a graphical representation of the spatially filtered unidimensional profile shown in Figure 4, used for determining heights of peaks representing the test line and control line respectively on the cassette, by the image analysis system shown in Figures 2A-2B, according to an embodiment of the present disclosure.

DETAILED DESCRIPTION

The Figures discussed below, and the various embodiments used to describe the principles of the present disclosure in this document are by way of illustration only and should not be construed in any way to limit the scope of the disclosure. Those skilled in the art will understand that the principles of the present disclosure may be implemented in any suitably arranged device. The numerous innovative teachings of the present disclosure will be described with reference to exemplary nonlimiting embodiments.

Various aspects of the present disclosure relate to techniques of image analysis. In the following description, numerous details are set forth for the purpose of explanation. However, one of ordinary skill in the art will realize that the disclosed may be practiced without the use of these specific details. In other instances, well-known features have not been described in detail to avoid obscuring the present disclosed technology.

Some of the techniques described herein can be implemented in software instructions stored on a computer-readable medium, software instructions executed on a computer, or some combination of both. Such methods can be executed on a single computer or on networked computers.

Although, the operations of the disclosed methods are described in a particular sequential order for convenient presentation, it should be understood that this manner of description encompasses rearrangements, unless a particular ordering is required by specific language set forth below. For example, operations described sequentially may in some cases be rearranged or performed concurrently. Moreover, for the sake of simplicity, the disclosed flow charts and block diagrams typically do not show the various ways in which particular methods can be used in conjunction with other methods. Additionally, the detailed description sometimes uses terms like "perform", "derive", etc., to describe the disclosed methods. Such terms are high-level descriptions of the actual operations that are performed. The actual operations that correspond to these terms will vary depending on the particular implementation and are readily discernible by one of ordinary skill in the art.

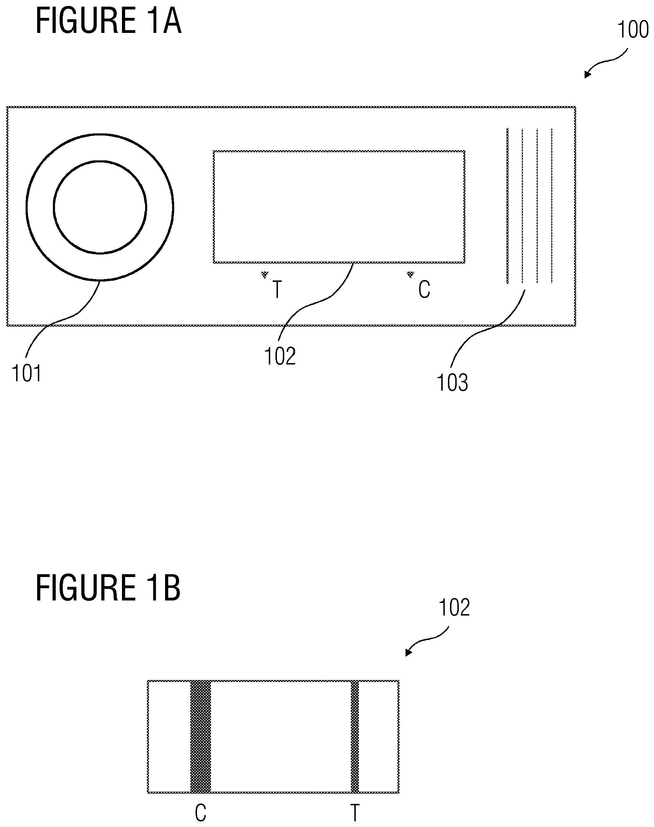

Figure 1A illustrates a cassette 100 employed in a lateral flow test. The cassette 100 may be coupled to an analyzing device such as a point of care (POC) device (not shown), comprising a measurement arrangement, which co-operates with the cassette 100 connected thereto. The cassette 100 includes a sample collection area 101 for receiving a sample of the blood or urine to be analyzed. The cassette 100 includes a result viewing area 102 and a unique identifier 103 such as a barcode assigned for each cassette 100.

Figure 1B illustrates the result viewing area 102 of the cassette 100 shown in Figure 1A. The result viewing area 102 includes therewithin nitrocellulose membranes, colored nanoparticles such as gold nanoparticles or labels, and antibodies, to produce test results in form of visual markers. In competitive assays, a positive test is represented by absence of a colored line at the test line position indicated by 'T' in the result viewing area 102. On the other hand, in sandwiched type assays, a positive test is represented by presence of a colored line at a test line position indicated by 'T' in the result viewing area 102. For example, when a sample is received in the sample collection area 101 of the cassette 100, of a sandwiched assay, the sample flows along passing through a conjugate pad into the nitrocellulose membrane and then onto an absorbent pad sandwiched with one another. The sample pad acts as the first stage of the absorption process, and in some cases contains a filter, to ensure the accurate and controlled flow of the sample. The conjugate pad, which stores the conjugated labels and antibodies, receives the sample. If the target analyte or pathogen is present in the sample, immobilized conjugated antibodies and labels will bind to the target and continue to migrate along the test. As the sample moves along the assay, that is, the test device, binding reagents situated on the nitrocellulose membrane bind to the target at the test line 'T' and a colored line forms therein. The density of the colored line varies depending on the quantity of the target analyte present in the sample. Some target analytes require quantification to determine the analyte concentration. The result viewing area 102 also includes a control line indicated by 'C' which appears in the result viewing area 102 irrespective of the target analyte being present in the sample. The control line 'C' enables to detect whether or not the cassette 100 is properly functioning.

The lateral flow assays, that is the cassettes 100 shown in Figure 1A are either interpreted visually by a user or via callout/readout devices, for example, POC devices employing either charge coupled device (CCD) sensors or camera-based detection units having discrete optical components usually Light emitting diodes (LEDs) as light source that illuminate the test samples for enhancing clarity of test-image capture. Once the test images are captured, different algorithmic or image processing approaches are applied to read and process the results. The results are either in qualitative, semi-quantitative or quantitative format. Camera-based products available in the market usually rely on high signal to noise ratio (SNR) images to improve detection threshold. The thresholds selected are applied to reflectance metric and are prone to false positive and false negative in case of noisy data.

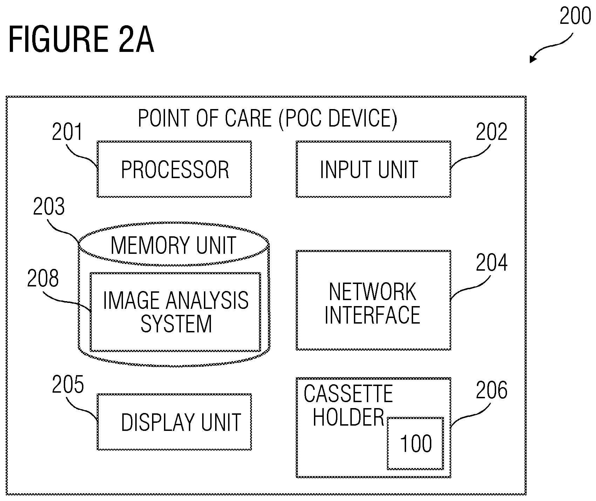

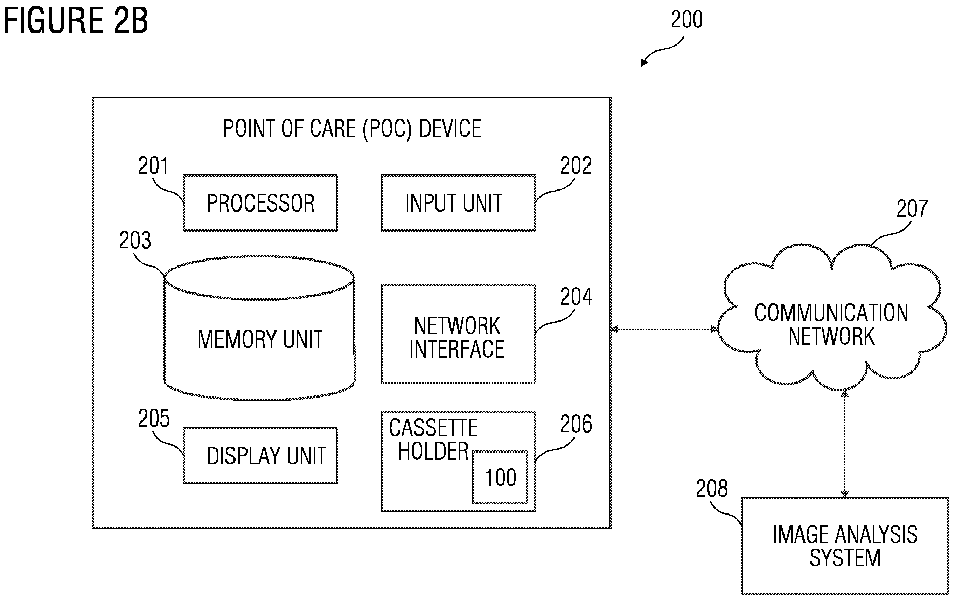

Figures 2A-2B illustrate a point of care (POC) device 200, according to various embodiments of the present disclosure. Figure 2A illustrates a point of care (POC) device 200 having an image analysis system 208 for determining a concentration of an analyte in a sample, according to an embodiment of the present disclosure. Figure 2B illustrates a POC device 200 capable of communicating with an image analysis system 208 for determining a concentration of an analyte in a sample, according to an embodiment of the present disclosure via a communication network 207. The communication network 207 is, for example, the internet, an intranet, a wired network, a wireless network, and/or any other suitable communication network capable of establishing a strong and secure communication. As shown in Figure 2B, the image analysis system 208 is configurable to be deployed as an edge device deployable at a medical premise or in a cloud computing environment, and capable of communicating with one or more POC devices 200 for determining a concentration of an analyte in a sample being tested by the POC device 200.

The POC device 200 is installable at a physician's clinic, a pathological laboratory, at a patient's residence, etc. The POC device 200 comprises one or more of a processor 201, an input unit 202, a memory unit 203, a network interface 204, and a display unit 205, capable of communication with one another. The POC device also comprises a cassette holder 206 for receiving a cassette 100 shown in Figure 1A. The cassette 100 carries the sample being tested by the POC device 200. The memory unit 203 of the POC device 200 stores therewithin the image analysis system 208. The memory unit 203 is communicatively coupled to the processor 201. The memory unit 203 refers to all computer readable media, for example, non-volatile media such as optical discs or magnetic disks, volatile media such as a register memory, a processor cache, etc., and transmission media such as wires that constitute a system bus coupled to the processor, except for a transitory, propagating signal. The memory unit 203 also stores computer program instructions defined by various modules of the image analysis system 208. The processor 201 is configured to execute the defined computer program instructions.

The processor 201 refers to any one or more microprocessors, central processing unit (CPU) devices, finite state machines, computers, microcontrollers, digital signal processors, logic, a logic device, an electronic circuit, an application specific integrated circuit (ASIC), a field-programmable gate array (FPGA), a chip, etc., or any combination thereof, capable of executing computer programs or a series of commands, instructions, or state transitions. The processor 201 may also be implemented as a processor set comprising, for example, a general purpose microprocessor and a math or graphics co-processor. The POC device 200 may also employ a controller or a microcontroller and is not limited to a processor. The memory unit 203 is used for storing programs, applications, and data. The memory unit 203 is, for example, a random access memory (RAM) or another type of dynamic storage device that stores information and instructions for execution by the processor 201. The memory unit 304 also stores temporary variables and other intermediate information used during execution of the instructions by the processor 201. The input unit 202 is used for inputting data into the POC device 200. An operator of the POC device 200 can use the input unit 202, for example, while configuring initial settings of the POC device 200. The input unit 202 may comprise, for example, a touchpad or a keypad, a microphone, or any device capable of sensing a tactile input, etc. The input device 200 comprises an imaging unit (not shown) such as a camera used for capturing an image of the cassette 100 positioned in the cassette holder 206.

The network interface 204 enables connection of the POC device 200 to a communication network 207 in an embodiment when the POC device 200 is capable of communication with one or more other devices via a communication network 207. For example, the POC device 200 connects to the communication network 207 via the network interface 204. In an embodiment, the network interface 204 is provided as an interface card also referred to as a line card. The network interface 204 comprises, for example, one or more of an infrared (IR) interface, an interface implementing wireless network or a serial bus network, an Ethernet interface, a frame relay interface, a cable interface, a digital subscriber line (DSL) interface, a token ring interface, a peripheral controller interconnect (PCI) interface, a local area network (LAN) interface, a wide area network (WAN) interface, interfaces using serial protocols, interfaces using parallel protocols, and Ethernet communication interfaces, asynchronous transfer mode (ATM) interfaces, a high speed serial interface (HSSI), a fiber distributed data interface (FDDI), interfaces based on transmission control protocol (TCP)/internet protocol (IP), interfaces based on wireless communications technology such as satellite technology, radio frequency (RF) technology, near field communication, etc.

The display unit 205 may comprise therewithin a graphical user interface (GUI), and displays information allowing an operator of the POC device 200 to visualizing results of the sample being analyzed. The display unit 205 comprises, for example, a liquid crystal display, a plasma display, an organic light emitting diode (OLED) based display, etc.

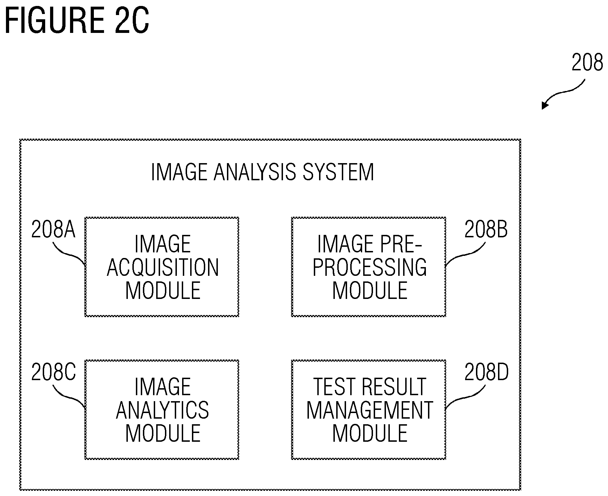

Figure 2C illustrates the image analysis system 208 shown in Figures 2A-2B for determining a concentration of an analyte in a sample, according to an embodiment of the present disclosure. The image analysis system 208 comprises an image acquisition module 208A, an image pre-processing module 208B, an image analytics module 208C and a test result management module 208D. According to an embodiment shown in Figure 2B, wherein the image analysis system 208 is deployed as an independent entity in form of an edge device or a cloud based device capable of communicating with the POC device 200 via the communication network 207, the image analysis system 208 may also comprise a processor (not shown), a network interface (not shown) capable of establishing aforementioned communication with the POC device 200, a display unit (not shown) capable of displaying messages, such as a success or a failure of establishing said communication with the POC device, and/or an image analysis database (not shown) for storing results of the tests performed by the POC device 200, images received and transmitted to the POC device 200, historical data associated with samples analyzed, etc.

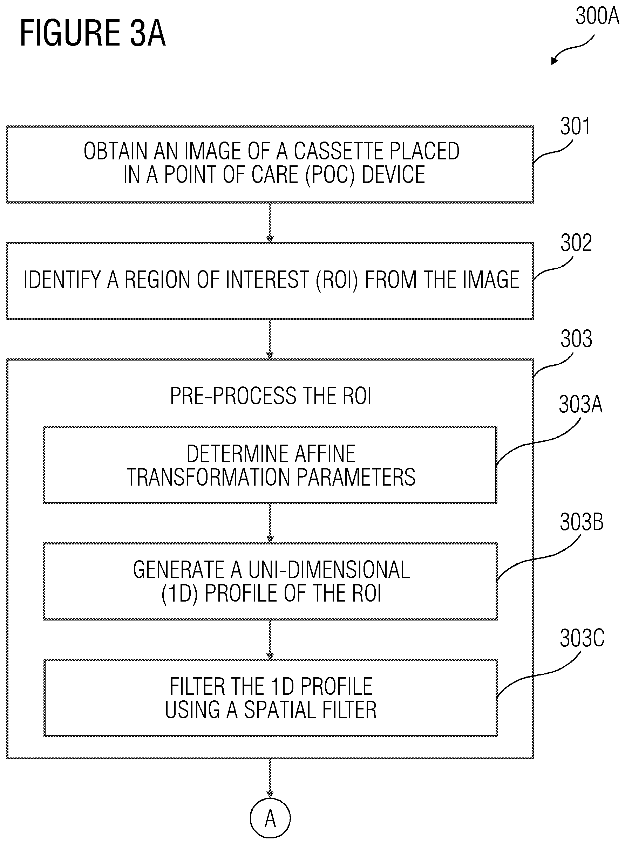

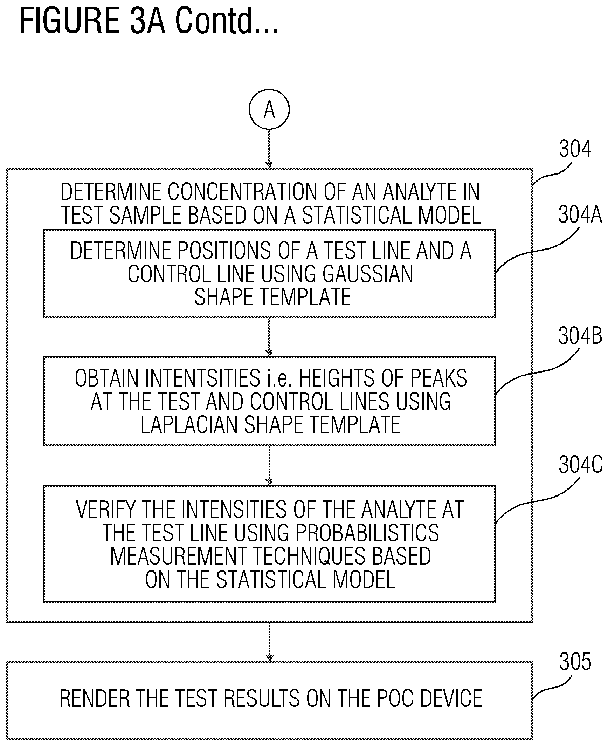

Figures 3A-3B illustrate process flowcharts 300A and 300B of a method for determining a concentration of an analyte in a sample, according to various embodiments of the present disclosure. Figure 3A shows the process flowchart 300A representing a method for determining a concentration of an analyte in a sample, according to an embodiment of the present disclosure. The method employs the image analysis system 208 and the POC device 200 comprising at least one processor configured to execute computer program instructions defined by the modules 208A-208D of the image analysis system 208 for determining a concentration of an analyte in the sample, shown in Figures 1A-2C.

At step 301, the image acquisition module 208A of the image analysis system 208 obtains an image of a cassette 100 placed in the cassette holder 206 of the POC device 200. According to an embodiment, the image acquisition module 208A obtains an image of the cassette 100 via a camera and a light source of the input unit 202 of the POC device 200. Illumination of the cassette 100, that is, the test sample, facilitates a uniform lighting of the cassette 100 thereby, enhancing quality of the image being acquired.

According to another embodiment, the image acquisition module 208A illuminates the cassette 100, with help of the POC device 200, for example, via an Ultra-Violet (UV) illumination source (not shown). Such illumination by the UV light enhances quality of the image being obtained and therefore, provides a high-contrast edge around reaction sites, that is, the test line and the control line in the result viewing area 102, and greatly reduces efforts and time required in locating these lines.

According to yet another embodiment, the image acquisition module 208A obtains an image of the cassette 100 over the communication network 207, for example, from the POC device 200 or from one or more external sources (not shown) storing the images therewith.

According to yet another embodiment, the image acquisition module 208A collectively obtains images of the cassettes 100 placed in various POC devices 200 with which the image analysis system 208 is communicating over the communication network 207. According to this embodiment, the image acquisition module 208A obtains several images and stores them in the image analysis database (not shown) of the image analysis system 208.

At step 302, the image pre-processing module 208B of the image acquisition system 208 identifies a region of interest (ROI) from the image. As used herein, "region of interest" refers to an area of the image of the cassette 100, corresponding to the result viewing area 102 of the cassette 100 shown in Figure 1B. The image pre-processing module 208B obtains the ROI from the image based on one or more physical characteristics of the cassette 100. The physical characteristics include physical dimensions such as a length, a breadth, a thickness, etc., of the cassette 100, the unique identifier 103 of the cassette 100 such as the barcode, etc. For example, the image pre-processing module 208B with help of the barcode localizes the cassette 100 placed inside the cassette holder 206 to neutralize variations present if any, in the image as a result of a size of the cassette 100 or a size of the cassette holder 206. Further to which, the image pre-processing module 208B identifies the result viewing area 102 that has the nitro-cellulose paper therewithin, in the image with help of the physical dimensions and/or manufacturing characteristics of the cassette 100.

At step 303, the image pre-processing module 208B prep-processes the ROI, for example, based on one or more characteristics of the POC device 200. The characteristics comprise, for example, a position, an angle, a focal length, a resolution, etc., of the imaging unit such as a camera of the input unit 202 of the POC device 200. Based on such characteristics of the POC device 200, the image pre-processing module 208B at step 303A, determines one or more affine transformation parameters associated with the ROI. The affine transformation parameters include a scale, a rotation, a translation, etc., of the ROI in a three-dimensional space that may have been caused due to the physical characteristics and configuration of the camera using which the image was acquired. Thus, with help of the affine transformation parameters, the image pre-processing module 208B corrects geometric distortions or deformations present in the ROI if any, due to non-ideal camera settings and/or angles of image capture.

The image pre-processing module 208B at step 303B, compresses the ROI into a unidimensional (1D) profile. The image pre-processing module 208B averages the ROI, for example, along a vertical axis, to obtain the 1D profile of the ROI. This 1D profile comprises, for example, a waveform representing variation in concentration of pixels across the ROI such that the test line and control line sites on the cassette 100 are captured in this waveform.

The image pre-processing module 208B at step 303C, filters the 1D profile using a spatial filter for smoothing the 1D profile. As used herein, "spatial filter" refers to an image processing technique employed for modifying or enhancing an image for smoothing by blurring and reducing noise in the image. The spatial filter may be a linear filter or a non-linear filter. The image pre-processing module 208B applies a smoothing Gaussian filter to the 1D profile for enhancing the 1D profile. Spatial filtering smoothens antibody deposition density variation on the nitrocellulose paper of the cassette 100, as well as variations resulting from flow of the sample on the nitro-cellulose paper. Spatial filtering reduces per image processing effort thereby, reducing the call-out time of test results without compromising on the accuracy of test results.

At step 304, the image analytics module 208C of the image analysis system 208 determines a concentration of an analyte in the sample being tested by analyzing the 1D profile based on a statistical model. As used herein, "statistical model" refers to a model including one or more parameters of the 1D profile, such as, intensity of the peaks of the 1D profile, varying with respect to time and/or concentration of the target analyte(s) in the sample being tested. At step 304A, the image analytics module 208C determines positions of the test line and the control line respectively using a Gaussian filter, that is, by applying a Gaussian shape template to the 1D profile. A Gaussian shape template when used for registration of the image of the cassette 100, accurately locates the position of the test line and the control line in the 1D profile. The gaussian shape template is used to find a cross-correlation between the template itself and the 1D profile such that a maximum cross correlation indicates an accurate location of the respective lines. Typically, when a sample is deposited in the sample collection area 101 of the cassette 100, it takes some time for the test line and the control line to start appearing in the result viewing area 102. Therefore, the image analytics module 208C together with the image acquisition module 208A obtains images of the cassette 100 followed with ROIs and the corresponding 1D profiles, at various time intervals. The image analytics module 208C registers each of these 1D profiles obtained over a certain time duration, for example up to 10 minutes, and applies a Gaussian shape template to these 1D profiles for accurately registering the image of the cassette 100. Moreover, such registration of an image with Gaussian shape template is immune to noise amplification in edge detection using gradient-based approaches.

At step 304B, the image analytics module 208C obtains from the 1D profile, heights of peaks at the test line and the control line positions using a Laplacian filter, that is a Laplacian shape template. The heights of the peaks indicate intensity, that is, a concentration of a target analyte present in the sample being tested. The image analytics module 208C applies the Laplacian shape template to the 1D profiles registered over a time period. The Laplacian shape template enables an early detection of the peaks representing the test line and the control line respectively. Moreover, peak height estimation using the Laplacian shape template helps in accommodating variations if present any in baseline 1D profiles as a result of the sample quantity, leakage illumination on the result viewing area 102 of the cassette 100, etc.

At step 304C, the image analytics module 208C determines concentration of the target analyte(s) present in the sample at the test line using probabilistic measurement techniques based on the statistical model. As used herein, "probabilistic measurement techniques" refer to a probabilistic approach using the statistical model.

According to one embodiment, the probabilistic measurement technique that the image analytics module 208C employs is Bayesian filtering which provides a confidence metric associated with presence of an analyte in the test sample. According to this embodiment, the image analytics module 208C feeds two inputs namely, the peak heights providing the intensity and therefore, concentration of the target analyte(s) present in the sample and the statistical model, into a Bayesian filter to estimate most-likely analyte concentration and a statistical distribution of the analyte concentration for the sample. The statistical distribution is computed using the formula given below:

$$D = \mu \pm \sigma$$

Wherein D is the statistical distribution, $\mu$ is the average and $\sigma$ is the standard deviation. A test result is called out to be positive based on a predefined threshold limit, for example, when the above statistical distribution has a confidence metric of 90% or higher, then the test result is considered to be positive. More the data available in the statistical model, higher is the accuracy of the Bayesian probabilistic estimations.

According to another embodiment, the probabilistic measurement technique that the image analytics module 208C employs is Kalman filtering. According to this embodiment, the image analytics module 208C feeds the peak heights and the statistical model into a Kalman filter to estimate most-likely analyte concentration and a statistical distribution of the analyte concentration for the sample. The image analytics module 208C fuses the statistical model with the concentration metric from ongoing test to improve the prediction accuracy. Such fusion using Kalman filter precludes pixel thresholding requirement and reduces false detections thereby, increasing accuracy without increasing time and effort of prediction.

The image analytics module 208C using aforementioned probabilistic measurement techniques correlates data from test and control lines for robustness. For example, if an outcome X is probabilistically derived for an event A and an event B then the image analytics module 208C gauges a confidence metric in the outcome X more accurately when knowledge of both event A and event B happening is available with the image analytics module 208C. Therefore, the image analytics module 208C together with the image acquisition module 208A and the image pre-processing module 208B, sources and processes data also for individual color planes and HSL and/or HSV transformation planes to capture the changes happening along these planes. This helps in increasing robustness of estimation of the analyte concentration in the test samples.

At step 305, the test result management module 208D renders the test results onto the POC device 200. For example, the test result management module 208D displays on the display unit 205 of the POC device 200, a unique identifier 103 of each cassette 100 from which the sample is being tested along with a result showing positive or negative test result for the respective cassettes 100. According to one embodiment, the test result management module 208D stores the aforementioned data being rendered into the memory unit 203 of the POC device or on a database (not shown) in cloud environment. Such data being stored may also comprise corresponding filtered 1D profile of the ROI, heights of the peaks representing the test and control lines on the cassette 100, and outcomes of the probabilistic measurement techniques, that is, the Bayesian or Kalman filters. According to another embodiment, the test result management module 208D renders data based on relevance to the user of the POC device 200, for example, an operator of the POC device 200 may be interested in visualizing outcome at each of the steps 301-305 described above whereas a patient may be interested in visualizing only the test result associated with his/her sample.

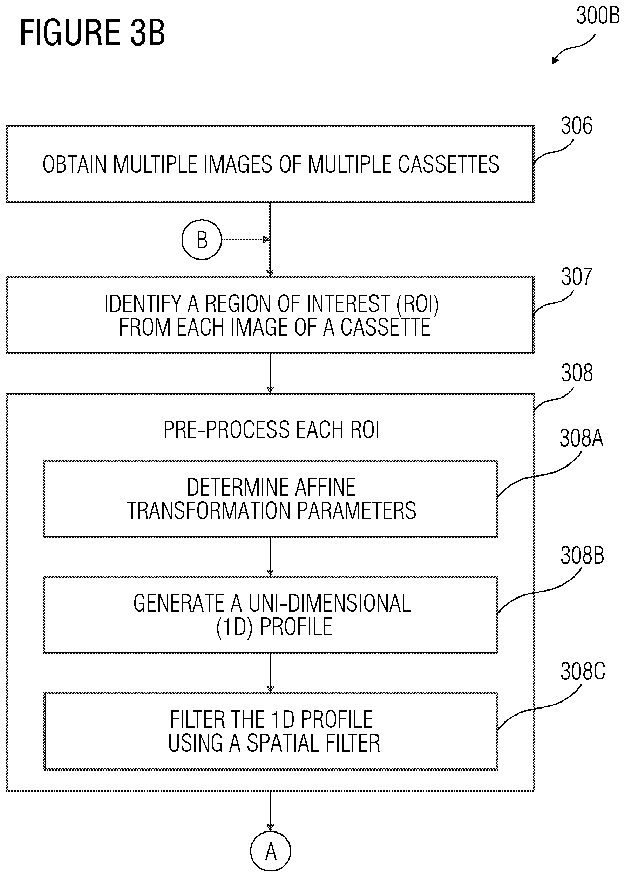

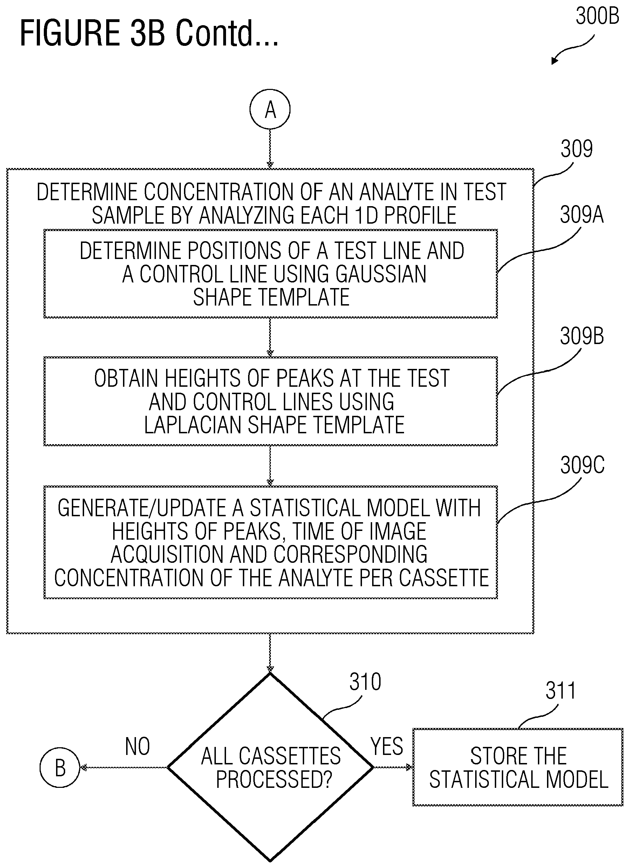

Figure 3B shows the process flowchart 300B representing a method for determining a concentration of an analyte in a sample, according to another embodiment of the present disclosure. The method employs the image analysis system 208 shown in Figures 1A-2C. The process flowchart 300B represents a learning mode of operation of the image analysis system 208 in which the statistical model is developed. At step 306, the image acquisition module 208A of the image analysis system 208 obtains multiple images of multiple cassettes 100, for example, at predefined time intervals. The predefined time intervals are based on the sample being tested and the time it typically requires to physically develop test line and control line on the nitro-cellulose paper of the cassette 100. The cassettes 100 used for developing the statistical model are chosen by sizing and choosing a cassette-test population, that is, various test samples with systemic and operational diversity such as different prototypes, different operators, time delay of inserting cassettes 100, different concentration of samples, different age of the cassettes 100, etc. The cassette-test population (CTP) can be represented as follows:

$$CTP = \{C1, C2, C3, \dots Cn\}$$

Where 'n' is the number of cassettes 100 included in the test population CTP. A set of images Is obtained for each of the cassettes 100 from the CTP can be represented as follows:

$$Is = \{C1(I1, I2, I3, \dots It), \dots Cn((I1, I2, I3, \dots It)\}$$

Where 't' is the predefined time interval over which the images are obtained of each cassette 100.

At step 307, the image pre-processing module 208B identifies the ROI from each image of the set of images Is, and can be represented as follows:

$$ROI_{Cx} = \{[ROI(I1), ROI(I2), \dots ROI(It)]\}$$

Such that x is a counter spanning from 1 to n that is number of cassettes 100 in the CTP.

At step 308, the image pre-processing module 208B of the image analysis system 208 processes each of the above ROIs that is, determines at step 308A affine transformation parameters as disclosed in the detailed description of Figure 3A and generates at step 308B a unidimensional (1D) profile corresponding to each ROI represented as follows:

$$1D_{Cx} = \{[1D(ROI(I1)), 1D(ROI(I2)), \dots 1D(ROI(It))]\}$$

At step 308C, the image pre-processing module spatially filters each of the above 1D profiles as disclosed in the detailed description of Figure 3A.

At step 309, the image analytics module 208C of the image analysis system 208 determines a concentration of one or more target analytes in the test sample by analyzing each 1D profile. At step 309A, the image analytics module 208C applies a Gaussian shape template to determine positions of the test and control lines in the 1D profile. At step 309B, the image analytics module 208C obtains heights of peaks at the test and control line positions indicative of an intensity and therefore, an associated concentration of the target analyte(s) in the sample being tested. The peak heights PH1 and PH2 for the test and control line positions respectively can be represented as follows:

$$PH1_{Cx} = \{[PH1(1D(ROI(I1))), PH1(1D(ROI(I2))), \dots PH1(1D(ROI(It)))]\}$$

and

$$PH2_{Cx} = \{[PH2(1D(ROI(I1))), PH2(1D(ROI(I2))), \dots PH2(1D(ROI(It)))]\}$$

At step 309C, the image analytics module 208C generates and/or updates a statistical model with aforementioned data. The statistical model comprises the peak heights, a time of acquisition of the image and a sample concentration corresponding to the peak height, that is, the intensity. The statistical model SM can be represented as shown in the table below:

| CTP | IS | PH1 | PH2 | Time stamp | Concentration (mLU/ml) |
|---|---|---|---|---|---|
|  | I1 | Value 1 | Value 2 | T1 | Value |
| C1 | I2 | Value 1 | Value 2 | T2 | Value |
|  | In | Value 1 | Value 2 | Tt | Value |
|  |  | Value 1 | Value 2 | T1 | Value |
| Cn | I2 | Value 1 | Value 2 | T2 | Value |
|  | In | Value 1 | Value 2 | Tt | Value |

At step 310, the image analytics module 208C checks whether all the cassettes 100 from the CTP have been processed, that is, whether x>= n. If not, then the steps from 307-309 are repeated. If yes, then at step 311, the image analytics module 208C stores the statistical model developed into an image analysis database (not shown) of the image analysis system 208. According to one embodiment, the image analytics module 208C stores the statistical model in the memory unit 203 of the POC device 200. According to another embodiment, the image analytics module 208C stores the statistical model in a cloud-based server (not shown). The image analytics module 208C thus, uses data from a wide cassette test population CTP to create one or more statistical models as disclosed above of the concentration metric of the sample for predicting the evolution of the concentration metric over a period of time. Thus, the image analytics module 208C derives statistical models comprising probability of concentration of an analyte in the test sample represented by a height of a peak in the 1D profile estimated across a time period and/or across various sample concentrations. The statistical model(s) so developed are then used as disclosed in the detailed description of Figure 3A for probabilistically predicting a likelihood, that is, a confidence level associated with accuracy of the target analyte concentration determined.

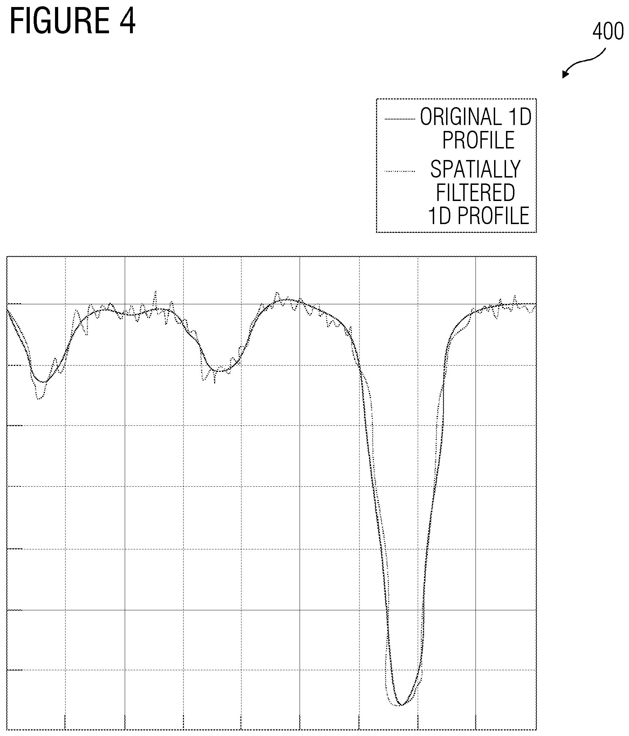

Figure 4 illustrates a graphical representation of a spatially filtered unidimensional (1D) profile 400 of an image processed by the image analysis system 208 shown in Figures 2A-2B, according to an embodiment of the present disclosure. The 1D profile 400 is a compressed ROI obtained from the image of the cassette 100, corresponding to the result viewing area 102 of the cassette 100 shown in Figures 1A-1B. The 1D profile 400 before spatial filtering and after spatial filtering is shown in Figure 4. The ID profile 400 after spatial filtering is visibly smoother with lesser distortions and noise compared to the 1D profile before spatial filtering.

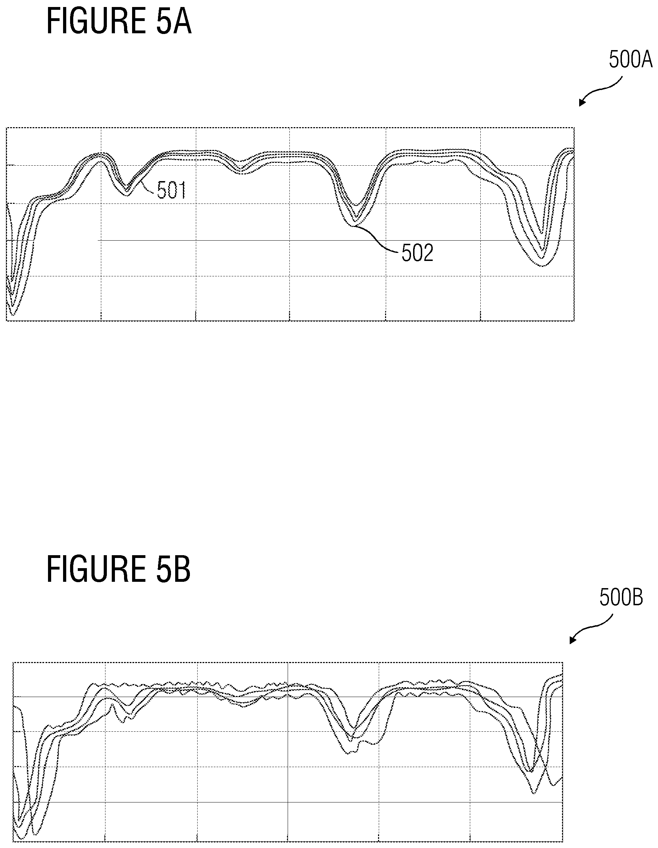

Figures 5A-5B illustrate comparative graphical representations 500A and 500B of 1D profiles 400 shown in Figure 4 corresponding to images registered using a Gaussian filter and not registered using a Gaussian filter, by the image analysis system 208 shown in Figures 2A-2B, according to an embodiment of the present disclosure. Testing of a sample using lateral-flow immunoassays, typically requires some time before the visual markers, that is, the test line and the control line start to appear in the result viewing area 102 of the cassette 100 shown in Figures 1A-1B. During this time period, the image analysis system 208 registers several images of the cassette 100. For each image acquired during this time period, the image analysis system 208 determines a ROI and generates a 1D profile 400 of the ROI. However, due to several factors playing a role in said image acquisition, the 1D profiles 400 corresponding to each image, slightly vary with respect to one another. As shown in Figure 5A, a variation in heights of the peaks 501 and 502 representing the test line and the control line respectively is natural, for example, as the test line and the control line become darker over time in a potentially positive sample. However, as shown in Figure 5B, there exist variations in the 1D profiles 400 apart from the peaks 501 and 502 shown in Figure 5A, for example, variations in parts of the 1D profiles 400 representing areas of the cassette 100 that do not change over time. Such variations need to be corrected for accurate and speedy call-out of the test results. Therefore, the image analysis system 208 applies a Gaussian shape template to the 1D profiles 400 shown in Figure 5B, that is unregistered images. Post application of the Gaussian shape template, the 1D profiles 400 of registered images are obtained as shown in Figure 5A.

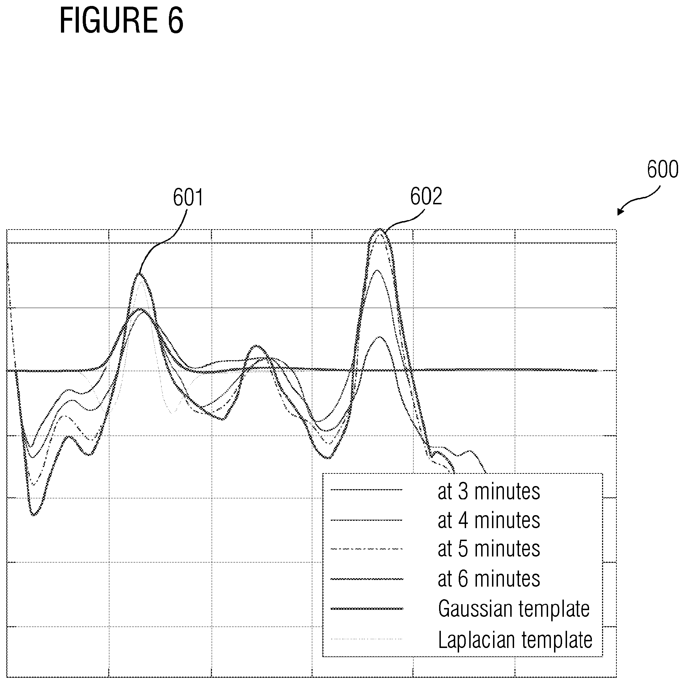

Figure 6 illustrates a graphical representation 600 of the spatially filtered unidimensional (1D) profile 400 shown in Figure 4, used for determining heights of peaks 601 and 602 representing the test line and control line respectively on the cassette 100 by the image analysis system 208 shown in Figures 2A-2B, according to an embodiment of the present disclosure. As shown in Figure 6, the image analysis system 208 applies a Laplacian shape template onto the 1D profiles 400 after application of the Gaussian shape template. The Laplacian shape template enables in early detection of the heights of the peaks 601 and 602 representing the test line and the control line respectively. For example, without image analysis system 208, the time required by a POC device 200 for determining concentration of a target analyte in the test sample would be X minutes and with image analysis system 208, the time required by the POC device 200 for determining concentration of a target analyte in the test sample would be Y minutes, such that Y is less than X. Moreover, estimating the heights of the peaks 601 and 602 with help of the Laplacian shape template provides robustness against varying baseline 1D profiles 400 due to assay flow, sample quantity, leakage illumination on the result viewing area 102 of the cassette 100, etc. After determining heights of the peaks 601 and 602, the image analysis system 208 stores these values with corresponding time of image acquisition. These values are then used by the image analysis system 208 in generating statistical models which are then fed into the probabilistic measurement techniques involving Bayesian filters and Kalman filters to gauge concentration of a target analyte in the sample being tested.

Those skilled in the art will recognize that, for simplicity and clarity, the full structure and operation of all data processing systems or computer systems suitable for use with the present disclosure is not being depicted or described herein. Instead, only so much of a data processing system or computer system as is unique to the present disclosure or necessary for an understanding of the present disclosure is depicted and described. The remainder of the construction and operation of the data processing system may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/-readable or computer usable/readable mediums include nonvolatile, hard-coded type mediums such as ROMs or EEPROMs, and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein. Various process steps can be omitted, repeated, performed sequentially or concurrently with other steps or processes, or combined with other steps or processes. The features or steps disclosed herein can be combined or exchanged with others within the scope of the disclosure. The scope of the invention is defined by the following claims

## Claims

1. An image analysis system (208) for determining from an image of a cassette containing a sample, a concentration of one or more target analytes in the sample, the image analysis system (208) comprising one or more modules configured to:

   - identify a region of interest (ROI) from the image corresponding to a result viewing area of the cassette (100);
   - generate a unidimensional (1D) profile of the ROI (303B) by averaging the ROI along a vertical axis;
   - apply a Gaussian filter to the 1D profile for determining a position of a test line and a position of a control line in the 1D profile (304A),
   - apply a smoothing Gaussian filter to the 1D profile for enhancing the 1D profile,
   - apply a Laplacian filter to the 1D profile for determining an intensity of a peak when present in the 1D profile (304B),
   and
   - probabilistically determine from the 1D profile, the concentration of the one or more target analytes in the sample based on a statistical model which is based on 1D profiles of ROIs of images obtained for a plurality of cassettes (100), wherein the statistical model comprises one or more parameters of the 1D profile varying with respect to one or more of time and the concentration of the one or more target analytes in the sample, wherein at least of the parameters is intensity of peaks in the 1D profile,

wherein the one or more modules are configured to spatially filter the 1D profile for reducing distortions in the 1D profile, and

wherein the one or more modules are configured to generate the statistical model based on 1D profiles of ROIs of images obtained for plurality of cassettes.

2. A point of care device comprising:

- a cassette holder (206) capable of accommodating a cassette (100) carrying a sample therein;
- a processor (201); and
- a memory unit (203) coupled to the processor (201), comprising an image analysis system (208) of claim 1 configured to determine a concentration of one or more target analytes in the sample,

wherein the one or more modules are configured to communicate with the point of care device and obtain the image of the cassette (100) via an imaging unit of the point of care device at predefined time intervals based on one or more characteristics of the sample.

3. The point of care system of claim 2, wherein the one or more modules are an image acquisition module (208A).

4. The image analysis system of claim 1, wherein the one or more modules are configured to probabilistically determine the concentration of the one or more target analytes in the sample by applying one of a Bayesian filter and a Kalman filter.

5. The image analysis system of claim 4, wherein the one or more modules are an image analytics module (208C).

6. The image analysis system of claim 1, wherein the one or more modules are configured to render a test result on a point of care device based on the concentration of the one or more target analytes in the sample.

7. The image analysis system of claim 6, wherein the one or more modules are a test result management module.

8. A method for determining from an image of a cassette (100) containing a sample, a concentration of one or more target analytes in the sample, the method comprising:

- identifying a region of interest (ROI) from the image corresponding to a result viewing area of the cassette (100);
- generating a unidimensional (1D) profile of the ROI (303B) by averaging the ROI along a vertical axis;
- applying a Gaussian filter to the 1D profile for determining a position of a test line and a position of a control line in the 1D profile (304A);
- applying a smoothing Gaussian filter to the 1D profile for enhancing the 1D profile;
- applying a Laplacian filter to the 1D profile for determining an intensity of a peak when present in the 1D profile at the test line and the control line (304B);
and
- probabilistically determining from the 1D profile, the concentration of the one or more target analytes in the sample based on a statistical model, wherein the statistical model comprises one or more parameters of the 1D profile varying with respect to one or more of time and the concentration of the one or more target analytes in the sample, wherein at least of the parameters is intensity of peaks in the 1D profile, and wherein the method further comprising:

- spatially filtering the 1D profile for reducing distortions in the 1D profile, and
- generating the statistical model based on 1D profiles of ROIs of images obtained for plurality of cassettes (100).

9. The method of claim 8, wherein probabilistically determining the concentration of the one or more target analytes in the sample comprises verifying the intensity based on the statistical model and one of a Bayesian filter and a Kalman filter.

**Patentansprüche**

1. Bildanalysesystem (208) zum Bestimmen einer Konzentration eines oder mehrerer Zielanalyten in einer Probe aus einem Bild einer Kassette, die die Probe enthält, wobei das Bildanalysesystem (208) ein oder mehrere Module umfasst, die zu Folgendem ausgelegt sind:

   - Identifizieren einer Region von Interesse (ROI) in dem Bild, die einem Ergebnisbetrachtungsbereich der Kassette (100) entspricht;
   - Erzeugen eines eindimensionalen Profils (1D-Profil) der ROI (303B) durch Mitteln der ROI entlang einer vertikalen Achse;
   - Anwenden eines Gauß-Filters auf das 1D-Profil zum Bestimmen einer Position einer Testlinie und einer Position einer Kontrolllinie in dem 1D-Profil (304A),
   - Anwenden eines Gauß-Glättungsfilters auf das 1D-Profil zum Verbessern des 1D-Profils,
   - Anwenden eines Laplace-Filters auf das 1D-Profil zum Bestimmen einer Intensität einer Spitze, wenn sie in dem 1D-Profil vorhanden ist (304B), und
   - probabilistisches Bestimmen der Konzentration des einen oder der mehreren Zielanalyten in der Probe aus dem 1D-Profil basierend auf einem statistischen Modell, das auf 1D-Profilen von ROIs von Bildern, die für mehrere Kassetten (100) erhalten werden, basiert, wobei das statistische Modell einen oder mehrere mit Bezug auf die Zeit und/oder die Konzentration des einen oder der mehreren Zielanalyten in der Probe variierende Parameter des 1D-Profils umfasst, wobei mindestens der Parameter die Intensität von Spitzen in dem 1D-Profil ist,

      wobei das eine oder die mehreren Module dazu ausgelegt sind, das 1D-Profil zum Reduzieren von Verzerrungen in dem 1D-Profil räumlich zu filtern, und
      wobei das eine oder die mehreren Module dazu ausgelegt sind, das statistische Modell basierend auf 1D-Profilen von ROIs von Bildern, die für mehrere Kassetten erhalten werden, zu erzeugen.

2. Point-of-Care-Vorrichtung, die Folgendes umfasst:

   - einen Kassettenhalter (206), der zum Aufnehmen einer Kassette (100), die eine Probe trägt, fähig ist;
   - einen Prozessor (201); und
   - eine mit dem Prozessor (201) gekoppelte Speichereinheit (203), die ein Bildanalysesystem (208) nach Anspruch 1 umfasst, das dazu ausgelegt ist, eine Konzentration eines oder mehrerer Zielanalyten in der Probe zu bestimmen,

   wobei das eine oder die mehreren Module dazu ausgelegt sind, mit der Point-of-Care-Vorrichtung zu kommunizieren und das Bild der Kassette (100) über eine Bildgebungseinheit der Point-of-Care-Vorrichtung in vordefinierten Zeitintervallen basierend auf einer oder mehreren Eigenschaften der Probe zu erhalten.

3. Point-of-Care-System nach Anspruch 2, wobei das eine oder die mehreren Module ein Bilderfassungsmodul (208A) sind.

4. Bildanalysesystem nach Anspruch 1, wobei das eine oder die mehreren Module dazu ausgelegt sind, die Konzentration des einen oder der mehreren Zielanalyten in der Probe durch Anwenden eines Bayes-Filters oder eines Kalman-Filters probabilistisch zu bestimmen.

5. Bildanalysesystem nach Anspruch 4, wobei das eine oder die mehreren Module ein Bildanalysemodul (208C) sind.

6. Bildanalysesystem nach Anspruch 1, wobei das eine oder die mehreren Module dazu ausgelegt sind, ein Testergebnis auf einer Point-of-Care-Vorrichtung basierend auf der Konzentration des einen oder der mehreren Zielanalyten in der Probe wiederzugeben.

7. Bildanalysesystem nach Anspruch 6, wobei das eine oder die mehreren Module ein Testergebnisverwaltungsmodul sind.

8. Verfahren zum Bestimmen einer Konzentration eines oder mehrerer Zielanalyten in einer Probe aus einem Bild einer Kassette (100), die die Probe enthält, wobei das Verfahren Folgendes umfasst:

   - Identifizieren einer Region von Interesse (ROI) in dem Bild, die einem Ergebnisbetrachtungsbereich der Kassette (100) entspricht;

- Erzeugen eines eindimensionalen Profils (1D-Profil) der ROI (303B) durch Mitteln der ROI entlang einer vertikalen Achse;

- Anwenden eines Gauß-Filters auf das 1D-Profil zum Bestimmen einer Position einer Testlinie und einer Position einer Kontrolllinie in dem 1D-Profil (304A);

- Anwenden eines Gauß-Glättungsfilters auf das 1D-Profil zum Verbessern des 1D-Profils;

- Anwenden eines Laplace-Filters auf das 1D-Profil zum Bestimmen einer Intensität einer Spitze, wenn sie in dem 1D-Profil an der Testlinie und der Kontrolllinie vorhanden ist (304B); und

- probabilistisches Bestimmen der Konzentration des einen oder der mehreren Zielanalyten in der Probe aus dem 1D-Profil basierend auf einem statistischen Modell, wobei das statistische Modell einen oder mehrere mit Bezug auf die Zeit und/oder die Konzentration des einen oder der mehreren Zielanalyten in der Probe variierende Parameter des 1D-Profils umfasst, wobei mindestens der Parameter die Intensität von Spitzen in dem 1D-Profil ist, und wobei das Verfahren ferner Folgendes umfasst:

- räumliches Filtern des ID-Profils zum Reduzieren von Verzerrungen in dem 1D-Profil und
- Erzeugen des statistischen Modells basierend auf 1D-Profilen von ROIs von Bildern, die für mehrere Kassetten (100) erhalten werden.

9. Verfahren nach Anspruch 8, wobei das probabilistische Bestimmen der Konzentration des einen oder der mehreren Zielanalyten in der Probe Verifizieren der Intensität basierend auf dem statistischen Modell und einem Bayes-Filter oder einem Kalman-Filter umfasst.

**Revendications**

1. Système d'analyse d'image (208) pour déterminer, à partir d'une image d'une cassette contenant un échantillon, la concentration d'un ou plusieurs analytes cibles dans l'échantillon, le système d'analyse d'image (208) comprenant un ou plusieurs modules configurés pour :

- identifier une région d'intérêt (ROI) de l'image correspondant à une zone de visualisation de résultat de la cassette (100) ;
- générer un profil unidimensionnel (1D) de la ROI (303B) en moyennant la ROI le long d'un axe vertical ;
- appliquer un filtre gaussien sur le profil 1D pour déterminer la position d'une ligne de test et la position d'une ligne de contrôle dans le profil 1D (304A),
- appliquer un filtre gaussien de lissage au profil 1D pour améliorer le profil 1D,
- appliquer un filtre Laplacien au profil 1D pour déterminer l'intensité d'un pic lorsqu'il est présent dans le profil 1D (304B), et
- déterminer, de manière probabiliste, à partir du profil 1D, la concentration des un ou plusieurs analytes cibles dans l'échantillon sur la base d'un modèle statistique qui est basé sur des profils 1D de ROI d'images obtenues pour une pluralité de cassettes (100), où le modèle statistique comprend un ou plusieurs paramètres du profil 1D variant par rapport à un ou plusieurs paramètres de temps et de concentration des un ou plusieurs analytes cibles dans l'échantillon, où au moins un des paramètres est l'intensité des pics dans le profil 1D,

où les un ou plusieurs modules sont configurés pour filtrer spatialement le profil 1D pour réduire les distorsions dans le profil 1D, et

où les un ou plusieurs modules sont configurés pour générer le modèle statistique sur la base des profils 1D de régions d'intérêt d'images obtenues pour plusieurs cassettes.

2. Dispositif d'analyse au point de soins comportant :

- un porte-cassette (206) apte à loger une cassette (100) contenant un échantillon ;
- un processeur (201) ; et
- une unité de mémoire (203) couplée au processeur (201), comprenant un système d'analyse d'images (208) selon la revendication 1, configuré pour déterminer la concentration d'un ou plusieurs analytes cibles dans l'échantillon,

les un ou plusieurs modules étant configurés pour communiquer avec le dispositif de point de soins et obtenir l'image de la cassette (100) par l'intermédiaire d'une unité d'imagerie du dispositif de point de soins à des intervalles de temps prédéfinis sur la base d'une ou plusieurs caractéristiques de l'échantillon.

3. Système de point de soins selon la revendication 2, dans lequel les un ou plusieurs modules sont un module d'acquisition d'images (208A).

4. Système d'analyse d'image selon la revendication 1, dans lequel les un ou plusieurs modules sont configurés pour déterminer de manière probabiliste la concentration des un ou plusieurs analytes cibles dans l'échantillon en appliquant l'un d'un filtre bayésien et d'un filtre de Kalman.

5. Système d'analyse d'image selon la revendication 4, dans lequel les un ou plusieurs modules sont un module d'analyse d'images (208C).

6. Système d'analyse d'image selon la revendication 1, dans lequel les un ou plusieurs modules sont configurés pour rendre un résultat de test sur un dispositif de point de soins sur la base de la concentration des un ou plusieurs analytes cibles dans l'échantillon.

7. Système d'analyse d'image selon la revendication 6, dans lequel les un ou plusieurs modules sont un module de gestion de résultat de test.

8. Procédé pour déterminer, à partir d'une image d'une cassette (100) contenant un échantillon, la concentration d'un ou plusieurs analytes cibles dans l'échantillon, le procédé comprenant les étapes suivantes :

   - identifier une région d'intérêt (ROI) de l'image correspondant à une zone de visualisation de résultat de la cassette (100) ;
   - générer un profil unidimensionnel (1D) de la ROI (303B) en moyennant la ROI le long d'un axe vertical ;
   - appliquer un filtre gaussien sur le profil 1D pour déterminer la position d'une ligne de test et la position d'une ligne de contrôle dans le profil 1D (304A) ;
   - appliquer un filtre gaussien de lissage au profil 1D pour améliorer le profil 1D ;
   - appliquer un filtre Laplacien au profil 1D pour déterminer l'intensité d'un pic lorsqu'il est présent dans le profil 1D au niveau de la ligne de test et de la ligne de contrôle (304B) ; et
   - déterminer, de manière probabiliste, à partir du profil 1D, la concentration des un ou plusieurs analytes cibles dans l'échantillon sur la base d'un modèle statistique, le modèle statistique comprenant un ou plusieurs paramètres du profil 1D variant par rapport au temps et la concentration des un ou plusieurs analytes cibles dans l'échantillon, où au moins un des paramètres est l'intensité des pics dans le profil 1D, et où le procédé comprend en outre les étapes suivantes :

      - filtrer spatialement le profil 1D pour réduire les distorsions dans le profil 1D, et
      - générer le modèle statistique sur la base des profils 1D de ROI d'images obtenues pour plusieurs cassettes (100).

9. Procédé selon la revendication 8, dans lequel la détermination probabiliste de la concentration des un ou plusieurs analytes cibles dans l'échantillon comprend de vérifier l'intensité sur la base du modèle statistique et de l'un d'un filtre bayésien et d'un filtre de Kalman.

# FIGURE 1A

100

101

102

103

T

C

# FIGURE 1B

102

C

T

# FIGURE 2A

200

POINT OF CARE (POC DEVICE)

201 PROCESSOR

202 INPUT UNIT

203 MEMORY UNIT

208 IMAGE ANALYSIS SYSTEM

204 NETWORK INTERFACE

205 DISPLAY UNIT

206 CASSETTE HOLDER

100

# FIGURE 2B

POINT OF CARE (POC) DEVICE

201 PROCESSOR

202 INPUT UNIT

203 MEMORY UNIT

204 NETWORK INTERFACE

205 DISPLAY UNIT

206 CASSETTE HOLDER 100

200

207 COMMUNICATION NETWORK

208 IMAGE ANALYSIS SYSTEM

# FIGURE 2C

208

IMAGE ANALYSIS SYSTEM

208A

IMAGE
ACQUISITION
MODULE

208B

IMAGE PRE-
PROCESSING
MODULE

208C

IMAGE
ANALYTICS
MODULE

208D

TEST RESULT
MANAGEMENT
MODULE

# FIGURE 3A

300A

301

OBTAIN AN IMAGE OF A CASSETTE PLACED
IN A POINT OF CARE (POC) DEVICE

302

IDENTIFY A REGION OF INTEREST (ROI) FROM THE IMAGE

303

PRE-PROCESS THE ROI

303A

DETERMINE AFFINE
TRANSFORMATION PARAMETERS

303B

GENERATE A UNI-DIMENSIONAL
(1D) PROFILE OF THE ROI

303C

FILTER THE 1D PROFILE
USING A SPATIAL FILTER

A

# FIGURE 3A Contd...

Ⓐ

**304**

DETERMINE CONCENTRATION OF AN ANALYTE IN TEST SAMPLE BASED ON A STATISTICAL MODEL

**304A**

DETERMINE POSITIONS OF A TEST LINE AND A CONTROL LINE USING GAUSSIAN SHAPE TEMPLATE

**304B**

OBTAIN INTENTSITIES i.e. HEIGHTS OF PEAKS AT THE TEST AND CONTROL LINES USING LAPLACIAN SHAPE TEMPLATE

**304C**

VERIFY THE INTENSITIES OF THE ANALYTE AT THE TEST LINE USING PROBABILISTICS MEASUREMENT TECHNIQUES BASED ON THE STATISTICAL MODEL

**305**

RENDER THE TEST RESULTS ON THE POC DEVICE

# FIGURE 3B

300B

OBTAIN MULTIPLE IMAGES OF MULTIPLE CASSETTES — 306

(B)

IDENTIFY A REGION OF INTEREST (ROI)
FROM EACH IMAGE OF A CASSETTE — 307

PRE-PROCESS EACH ROI — 308

DETERMINE AFFINE
TRANSFORMATION PARAMETERS — 308A

GENERATE A UNI-DIMENSIONAL
(1D) PROFILE — 308B

FILTER THE 1D PROFILE
USING A SPATIAL FILTER — 308C

(A)

# FIGURE 3B Contd...

300B

(A)

309

DETERMINE CONCENTRATION OF AN ANALYTE IN TEST
SAMPLE BY ANALYZING EACH 1D PROFILE

309A

DETERMINE POSITIONS OF A TEST LINE AND
A CONTROL LINE USING GAUSSIAN
SHAPE TEMPLATE

309B

OBTAIN HEIGHTS OF PEAKS AT THE TEST
AND CONTROL LINES USING
LAPLACIAN SHAPE TEMPLATE

309C

GENERATE/UPDATE A STATISTICAL MODEL WITH
HEIGHTS OF PEAKS, TIME OF IMAGE
ACQUISITION AND CORRESPONDING
CONCENTRATION OF THE ANALYTE PER CASSETTE

310

NO ← (B)   ALL CASSETTES
PROCESSED?   YES →   311

STORE THE
STATISTICAL MODEL

FIGURE 4

400

ORIGINAL 1D PROFILE

SPATIALLY FILTERED 1D PROFILE

## FIGURE 5A

500A

501

502

## FIGURE 5B

500B

# FIGURE 6

**EP 4 221 575 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019246361 A1